# EUROPÄISCHE PATENTSCHRIFT

(11) **EP 1 999 451 B1**
(45) Veröffentlichungstag und Bekanntmachung des Hinweises auf die Patenterteilung: **09.09.2015**
(21) Anmeldenummer: 07722151.3
(22) Anmeldetag: 27.03.2007
(51) Int. Cl.: G01N 3/04, G01N 3/36, B64F 5/00, G01N 3/12, G01M 3/02

(54) **PRÜFVORRICHTUNG FÜR RUMPFSCHALEN**
TESTING DEVICE FOR FUSELAGE SHELLS
DISPOSITIF DE CONTRÔLE POUR COQUES DE FUSELAGE

(30) Priorität: 29.03.2006 DE 102006015642
(43) Veröffentlichungstag der Anmeldung: 10.12.2008
(60) Teilanmeldung: 08104311.9
(73) Patentinhaber: IMA Institut für Materialforschung und Anwendungstechnik GmbH, 01109 Dresden (DE)
(72) Erfinder: GÖTZE, Matthias, 01129 Dresden (DE); SACHSE, Mirko, 01129 Dresden (DE); BEST, Roald, 01309 Dresden (DE); BERTHOLD, Udo, 01109 Dresden (DE); GRÖTZSCHEL, Georg, 01139 Dresden (DE)
(74) Vertreter: Sperling, Thomas
(86) Internationale Anmeldenummer: PCT/DE2007/000593
(87) Internationale Veröffentlichungsnummer: WO 2007/110067

(56) Entgegenhaltungen:
- EP-A- 1 524 513
- WO-A-2007/053156
- DE-A1- 19 727 754
- FR-A- 2 788 743
- SU-A1- 1 798 654
- US-A- 4 976 136
- US-A- 5 528 155
- US-A- 6 158 666
- US-A1- 2003 146 346
- US-A1- 2006 101 921
- AMBUR DAMODAR R ET AL: "Design and evaluation of composite fuselage panels subjected to combined loading conditions" JOURNAL OF AIRCRAFT, AIAA, RESTON, VA, US, Bd. 42, Nr. 4, 2005, Seiten 1037-1045, XP008082679 ISSN: 0021-8669 in der Anmeldung erwähnt

## Beschreibung

Die Erfindung betrifft eine Prüfvorrichtung für Rumpfschalen und ist insbesondere zur dynamischen Rumpfschalenprüfung geeignet.

Unter einer Rumpfschale soll ganz allgemein ein flächiges Objekt verstanden werden, das mittels der Prüfvorrichtung mit verschiedenen Belastungen und Überlagerungen von Belastungen zum Zwecke der Prüfung der Bauteileigenschaften beaufschlagt wird. Dabei ist die Rumpfschale als Prüfling zumeist Teil eines komplexen Tragsystems, welches aufgrund seiner Größe, wie im Falle von Flugzeugrümpfen, nicht im Ganzen einer effizienten Prüfung auf seine Bauteileigenschaften unterzogen werden kann.
Derartige Prüfvorrichtungen dienen somit der Untersuchung von einzelnen Teilen, welche praxisnahen Beanspruchungen unterzogen werden müssen, um dabei die für Zulassungen oder Ähnliches erforderlichen Bauteileigenschaften erfolgreich nachzuweisen. Die Prüfvorrichtungen dienen darüber hinaus entwicklungsbegleitenden statischen und dynamischen Untersuchungen an beispielsweise Flugzeugrumpfschalen. Die Rumpfschalen werden beispielsweise aus Verbundwerkstoffen, insbesondere Faserverbundstrukturen, gefertigt. Unter Verbundwerkstoffen und insbesondere Faserverbundstrukturen werden beispielsweise Carbonfaserkunststoff CFK oder glasfaserverstärkter Kunststoff GFK aber auch GFK-Aluminiumverbunde verstanden.

Bei den Prüflingen handelt es sich regelmäßig um geometrisch, also konstruktiv, sowie werkstoffseitig anisotrope Flächentragwerke. Sie sind charakterisiert durch mehrachsige, linienhafte Schnittlastverläufe und daraus resultierenden mehrachsigen Beanspruchungszuständen. Um die Prüflinge praxisnahen Tests auszusetzen, sind mindestens drei Lastachsen zu untersuchen. Es handelt sich dabei um die Längsdehnung, die Umfangsdehnung und den Schubfluss. Außerdem werden lokale Einflüsse aus Innenüberdruck bei Flugzeugen nachgebildet, weiche die Wirkung der Steifigkeitsverteilung der Rumpfstruktur beim Flug in großen Höhen widerspiegeln.

Auf dem Gebiet der Bauteilprüfvorrichtungen von Flugzeugrumpfschalen, im Folgenden als Rumpfschalen bezeichnet, sind verschiedene Konzepte bekannt.

Nach der DE 103 44 855 B4 ist beispielsweise eine Druck-Schubanlage zur Einleitung von hohen Schublasten bekannt, bei welcher die Druck- und Schublasten in gleicher Richtung wirken und über getrennte regelbare Elemente aufgebracht werden können. Nachteilig bei dieser Vorrichtung ist, dass eine flächige Luftdruckbelastung oder die alternative Zugkraftüberlagerung mit dieser Vorrichtung nicht realisierbar ist.

Im Stand der Technik sind Prüfvorrichtungen für Rumpfschalen bekannt, die eine Luftdruckbelastung der Rumpfschalen ermöglichen. So ist in der DE 197 027 754 A1 eine Vorrichtung zum Einspannen und Prüfen von Prüfkörpern, insbesondere von Flugzeug-Rumpfschalenteilen, bekannt. Dabei werden die Rumpfschalen verschiedenen dynamischen Belastungen gleichzeitig ausgesetzt. Insbesondere sind das eine Zugbelastung in Längsrichtung der Rumpfschale und eine flächige Luftdruckbelastung, die aufgrund einer Druckdifferenz zwischen dem Flugzeuginnenraum und der Außenumgebung entsteht.

Nachteilig bei diesen Prüfvorrichtungen ist, dass sie jede für sich Lastkombinationen ermöglichen, die erst in ihrer gemeinsamen Anwendung die separate Prüfung sämtlicher zylindrischer Rumpfbereiche in vollem Umfang, das heißt betriebslastennah, abdecken könnten. Dafür sind die vorgestellten Verfahren jedoch selbst mit Modifikationen physikalisch zu stark eingeschränkt.
Sekundär ist zu bemerken, dass die Vorrichtungen nach der DE 197 027 754 A1 im Überdrucklastfall ihrem Prinzip inhärent die Sektorsymmetrie nur fehlerhaft abbilden kann. Das heißt, es stellt sich eine für dünne Rumpfschalenhäute akzeptable Biegemomentverteilung ein.
Herkömmlich werden also Vorrichtungen eingesetzt, in denen die Rumpfschalen schwimmend gelagert untersucht werden, wobei oft eine stark wechselnde Verteilung der Beanspruchung als nachteilig zu verzeichnen ist. Darüber hinaus führt die getrennte Einleitung von Umfangs- und Schublasten zu einer Minderung der Qualität der Prüfung.
Somit sind insgesamt Schubflusstests nicht bzw. nur mangelhaft mit herkömmlichen mehrachsigen Prüfvorrichtungen auf der Basis von schwimmend gelagerten Schalen realisierbar und weiterhin sind Überlagerungen von Beanspruchungen gleichfalls nicht in ausreichendem Maße nachbildbar.

Aufbauend auf diesem Stand der Technik sind zur Überwindung der genannten Nachteile auch Prüfvorrichtungen bekannt, welche als so genannte D-Boxen in den Fachkreisen bezeichnet werden. In Ambur, D., Rouse, M.: Design and Evaluation of Composite Fuselage Panels Subjected to Combined Loading.Conditions. In: Journal of Aircraft, Vol. 42, No. 4, July-August 2005 ist eine D-Box offenbart, die einen kreisbogensegmentförmigen Querschnitt für die Komplementärstruktur zeigt.
Die Ausgestaltung der D-Box mit kreisbogensegmentförmigem Querschnitt ist mit diversen Nachteilen verbunden. Insbesondere sind dabei zu nennen, dass eine vorzugsweise starre Kopplung zwischen Schale und Komplementärstruktur aufgrund der Steifigkeitsverhältnisse nicht ohne erhebliche Beanspruchungsstörungen anwendbar ist. Die Folge ist eine gelenkige Ausführung der Kanten am Längsrand. Dies wird mittels diskreten Scharnieren zwischen den einzelnen Balgen verwirklicht. Konsequenz ist eine umfangreiche Einschränkung der möglichen Prüfaufgaben, insbesondere hohe Schubbeanspruchung und Restfestigkeitsuntersuchungen im allgemeinen. Die Einschränkung ergibt sich durch die konstruktiv erzwungenen Beanspruchungskonzentrationen der diskreten Ausführung.
Die korrigierenden Maßnahmen in Sekantenrichtung des Ersatzquerschnitts lassen sich ausschließlich auf einen Arbeitspunkt der Lastzyklen einstellen - passive Spreizen.
Weiterhin nachteilig ist, dass die kreisbogensegmentförmige Gestaltung des Querschnitts der D-Box nach dem Stand der Technik zu einem erhöhten Platzbedarf führt. Es handelt sich bei der D-Box ganz allgemein um ein im Querschnitt D-förmiges Gebilde, bei dem der so genannte "Weiche Kasten" die ergänzende Struktur zur Rumpfschale bildet, die Komplementärstruktur. Die Rumpfschalen wird zur Prüfung mechanisch diskret und gelenkig mit dem "Weichen Kasten" verbunden.

Weiterhin nachteilig ist jedoch, dass Verbundmaterialien nicht hinreichend sicher und verlässlich in Prüfvorrichtungen mit einem "Weichen Kasten" aus Metall untersucht werden können, da das Metall eine Fließgrenze aufweist, welche für Verbundmaterialien untypisch ist, was somit zum Nichterreichen des gewünschten Prüfbereichs führt. Ein weiterer Nachteil der bekannten Prüfvorrichtungen besteht darin, dass keine Spantkrafteinleitung möglich ist.

Aufgabe der vorliegenden Erfindung ist es, eine Vorrichtung zur effizienten Prüfung von Schalenelementen zur Verfügung zu stellen, die die Messung von Schubflussbeanspruchungen sowie von Überlagerungen von mehreren Beanspruchungsarten praxisnah realisiert, wobei die Prüfvorrichtung auch kosteneffizient einsetzbar sein soll.

Die Aufgabe wird durch eine Prüfvorrichtung für Rumpfschalen gelöst, wobei der Prüfling mit einer Komplementärstruktur verbunden ist.

Nach einer ersten Ausgestaltung der Erfindung, die innerhalb der D-Box als Weicher Kasten bezeichnet wird, ist die Komplementärstruktur im Querschnitt Unförmig ausgebildet und besitzt an den Enden der Schenkel Auflagen in Längsrichtung der Komplementärstruktur- Längsflansche.- mit Mitteln zur Fixierung der Rumpfschale an der Komplementärstruktur sowie zur Einleitung von Korrekturkräften und Übertragung von Prüfkräften. Die Mittel zur Fixierung der Rumpfschale zeichnen sich durch eine besondere Kombination von Form- und Kraftschluss, im Sinne des Austauschbaus/Prüflingswechsels, aus. Die Mittel zur Fixierung der Rumpfschale an der Komplementärstruktur sind zur Einleitung und Aufnahme von Prüfschnittkräften in Quer- und Längsrichtung ausgebildet.
An den Begrenzungen der Komplementärstruktur in Längsrichtung sind Querflansche angeordnet, welche der Einleitung und Aufnahme von Prüfkräften in Umfangsrichtung sowie von Hilfskräften in Längsrichtung dienen. Sie ermöglichen eine Belastung des Ersatzquerschnitts - Druckröhre - in sechs Freiheitsgraden. Die Komplementärstruktur ist als Weicher Kasten aus Verbundmaterialien ausgebildet, sprich sowohl geometrisch als auch werkstoffseitig anisotrop gestaltet, wodurch außerdem die unerwünschte Fließgrenze, wie sie bei Prüfvorrichtungen mit Komplementärstrukturen aus Metall auftritt, entfällt. Die Beanspruchungsgrenzen, speziell Bruchdehnungen, werden gezielt über denen der CFK-Prüflinge eingestellt.

Nach einer bevorzugten Ausgestaltung der Erfindung ist die Komplementärstruktur aus glasfaserverstärktem Epoxidharz ausgebildet. Die Längsflansche an den Enden der Schenkel sind im Ausführungsbeispiel in einem Winkel *α_{SW}* = 22° zur Verbindungslinie zwischen den Schenkeln ausgebildet.

Allgemein gilt die Beziehung *α_{SW} = α_{pü}* - 0,5°, wobei der Index "SW" für Sandwich und "pü" für den mit Überdruck beaufschlagten Kreisausschnitt stehen.

Die Komplementärstruktur wird bevorzugt in Längsrichtung auf alternierend aneinander gereihten U-Profilen gebildet, so dass ein wellenartiger Längsschnitt entsteht. Die Materialdicke der Komplementärstruktur aus Verbundmaterialien beträgt für den ersten Prüfschalentyp - CFK-Sandwichschalen - bevorzugt 13,6 mm, wobei das Verbundmaterial der Komplementärstruktur aus bis zu 23 einzelnen Schichten aufgebaut ist.

Die Erfindung wird weiterhin alternativ dadurch gelöst, dass die Prüfvorrichtung für Rumpfschalen mit einer Komplementärstruktur derart ausgestaltet ist, dass sich der Ersatzquerschnitt aus N-Rumpfschalen mit N-Schalenkopplern definiert, wobei N ganzzahlig ist - Di-, Tri-, Tetra-Box.

Die Konzeption der Erfindung beruht darauf, einen Ersatzquerschnitt zu bilden, der aus einer oder mehreren Rumpfschalen und einer Komplementärstruktur besteht, wobei die Komplementärstruktur durch alle Elemente des Ersatzquerschnitts gebildet wird, die nicht Rumpfschalen sind. Der Ersatzquerschnitt selbst ist geschlossen, um einen Druckbehälter auszubilden.

Ein Vorteil der erfindungsgemäßen Konzeption besteht darin, dass eine Komplementärstruktur genutzt wird, die sich durch extrem richtungsabhängige mechanische Eigenschaften auszeichnet. Dies dient der Beherrschbarkeit der Dimensionen und somit der erreichbaren Versuchsqualität des umgebenden Prüfstandaufbaus. Gleichzeitig wird ihr gegenüber lokalen und globalen Dehnungen eine sehr hohe Widerstandsfähigkeit abverlangt. Die Übertragung bzw. Einleitung von Umfangsbruchlasten oder Schubbruchlasten sowie hoher überlagerter Anteile beider Komponenten mit Überlagerungen von ca. 75 % wird durch die erfindungsgemäße Vorrichtung ermöglicht. Gleichfalls, ist eine lösbare Verbindung zwischen den Rumpfschalen und der Komplementärstruktur vorgesehen, was vorteilhaft zu einer Wiederverwendbarkeit der Komplerpentärstrükturen führt. Nach der alternativen Ausgestaltung der Erfindung wird die Komplementärstruktur gegenüber eines Prüflings anteilig durch benachbarte Prüflinge gebildet, was zu einer enormen Zeit- und Kosteneffizienz des Prüfverfahrens führt, da mit einem Prüfvorgang gleichzeitig mehrere Prüflinge getestet werden können. Die erfindungsgemäße Vorrichtung ist generell für die Prüfung von faserverstärkten Kunstoffen (FVK), wie GFK oder CFK, geeignet.

Durch die Schaffung eines Ersatzquerschnitts zur Reduzierung der benötigten Lasteinleitungen - im Vergleich zu schwimmend gelagerten Versuchsschalen - werden vielfältige Vorteile erzielt. Beispielsweise wird der Querschnitt gegenüber einer Rumpftonne erheblich verringert. Damit werden mit erfindungsgemäßen Vorrichtungen Prüfungen realisierbar, welche sonst infolge der Dimensionen und Größenordnungen der zu prüfenden Elemente nur mit extrem hohen Aufwendungen für den Prüfstand realisiert werden könnten.

Nach einer vorteilhaften Ausgestaltung der Erfindung besitzt die Komplementärstruktur-Schalenkoppler einen V-förmigen Querschnitt, der aus zwei geraden Schenkeln besteht, die durch eine Verrundung miteinander verbunden sind. Die Verrundung enthält Kontaktflächen zur Korrekturkrafteinleitung mittels Druckstücken.

Nach einer alternativen vorteilhaften Ausgestaltung der Erfindung besitzt der Komplementärstruktur.-Schalenkoppler einen Y-förmigen Querschnitt, der aus zwei geraden Schenkeln besteht, die durch eine gemeinsame gerade Verlängerung miteinander verbunden sind. Die Verlängerung enthält Mittel zur diskreten Korrekturkrafteinleitung mittels Zuglaschen bzw. Zuganker.

Erfindungsgemäß ist der Ersatzquerschnitt prinzipiell aus einer, zwei, drei oder vier Rumpfschalen und Weichem Druckkasten, respektive der korrespondierenden Anzahl Schalenkopplern, definiert.

Die Mittel zur Fixierung der Rumpfschale an der Komplementärstruktur sind bevorzugt aus einer trichterförmigen Vertiefung und einer korrespondierend dazu ausgebildeten Einspannscheibe sowie aus Schrauben und Muttern ausgebildet, wobei an der der Rumpfschale zugewandten Oberseite der Einspannscheibe eine Riffelung aus Pyramidenstümpfen vorgesehen ist.

Der Weiche Druckkasten oder die Schalenkoppler sind bevorzugt aus glasfaserverstärktem Epoxidharz ausgebildet und lassen sich für Bruchversuche an kohlefaserverstärkten Kunststoffen einsetzen.

Nach einer vorteilhaften Ausgestaltung der Erfindung lassen sich spantverstärkte Rumpfschalen mit erhöhter Genauigkeit prüfen, wenn eine passive oder aktive Spantspreize vorgesehen ist. Die Spantspreize verfügt über einen inneren und äußeren Schenkel - verbunden mit einem Längenausgleich, wobei die passive Spantspreize derart ausgebildet ist, dass die lokal exzentrische Tangentialkrafteinleitung ausgleichbar ist. Als Vorteil hervorzuheben ist, dass der relative Winkel zwischen den Spantköpfen unter Belastung der Rumpfschale annähernd konstant bleibt.
Eine aktive Spantspreize weist gleichfalls einen inneren und äußeren Schenkel - verbunden mit einem Längenausgleich - auf, wobei im Unterschied zur passiven Spantspreize der innere Schenkel über ein Gelenk mit dem Spantkopf verbunden ist und dass weiterhin ein Korrekturaktor am inneren Schenkel parallel angeordnet und mit der Kolbenstange über ein zweites Gelenk mit dem Spantkopf derart verbunden ist, dass die lokal exzentrische Tangentialkrafteinleitung durch die aktive Spantspreize ausgeglichen wird. Der relative Winkel zwischen den Spantköpfen bleibt unter Belastung der Rumpfschäle konstant oder wird hyperkorrigiert. Entweder der Winkel oder das Biegemoment werden als Regelgröße genutzt und die jeweils abhängige Komponente stellt sich ein.

Die Vorteile der erfindungsgemäßen Vorrichtung sind folgendermaßen zusammenzufassen:
- Reduzierung der aktiven Lasteinleitung,
- kontinuierliche Randanbindung → bestmöglicher Kraftfluss,
- Austauschbau trotz starrer Anbindung der Prüflinge,
- Einsatz variabler Sandwichdicken der Prüflinge,
- Erhöhung der Versuchsfrequenz,
- optimierte Sektorsymmetrie unter Überdrucklast,
- Qualitätssteigerung der Beanspruchungsverteilung,
- passive Lasteinleitung für die Spante, d. h. Minderung der Regelfehler,
- Erfassung aller zylindrischen Rumpfabschnitte in der versuchstechnischen Simulation,
- geringerer Energiebedarf gegenüber Tonnenversuch,
- geringere Probenzahl bei gleichem Erkenntnisgewinn, verbunden mit weniger Abfall,
- schnellerer Erkenntnisgewinn, was zu geringerem Treibstoffverbrauch durch besser optimierte Rumpfschalen führt,
- Verkürzung des Gesamtentwicklungsprozesses, was zu einer verbesserten Wettbewerbsposition führt.

Besonders hervorzuheben ist, dass mit der erfindungsgemäßen Vorrichtung auch verteilte Belastungen im Test reproduzierbar angewendet werden können, wohingegen bei der D-Box nach dem Stand der Technik nur umlaufende gleichförmige Belastungen aufprägbar sind. Zudem wurden statische, Bauteil zerstörende Restfestigkeitsver-, suche für alle Lastkomponenten in den Leistungsbereich aufgenommen.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: perspektivische Darstellung einer Komplementärstruktur in der Ausführungsform als Weicher Kasten;
- Fig. 2:: Vorderansicht einer Komplementärstruktur in der Ausführungsform als Weicher Kasten;
- Fig. 3:: schematischer Querschnitt eines Ersatzquerschnitts in der Ausführungsform als Di-Box;
- Fig. 4:: schematischer Querschnitt eines Ersatzquerschnitts in der Ausführungsform als Tri-Box;
- Fig. 5: Ausgestaltungen der Ersatzquerschnitte als a) Di-, b) Tri- und c) Tetra-Box mit Anordnung von Korrekturaktoren im Inneren der Struktur;
- Fig. 6 a:: Schalenkoppler als Zugplatte in Y-Form in perspektivischer Darstellung;

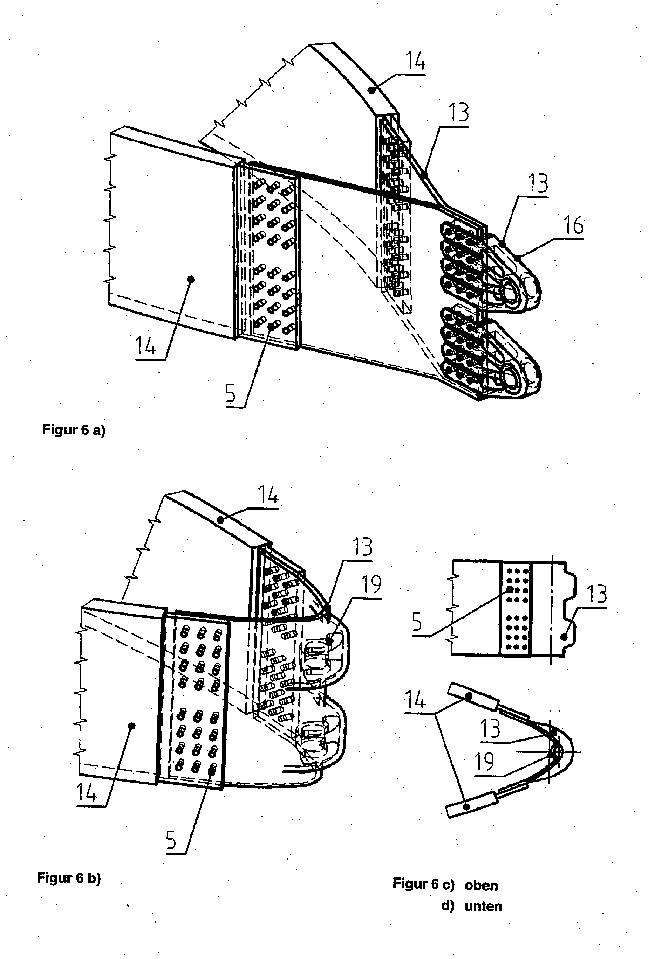

- Fig. 6 b:: Schalenkoppler als Zugplatte in V-Form in perspektivischer Darstellung;
- Fig. 6 c:: Schalenkoppler als Zugplatte in V-Form in Seitenansicht;
- Fig. 6 d:: Schalenkoppler als Zugplatte in V-Form in Draufsicht;

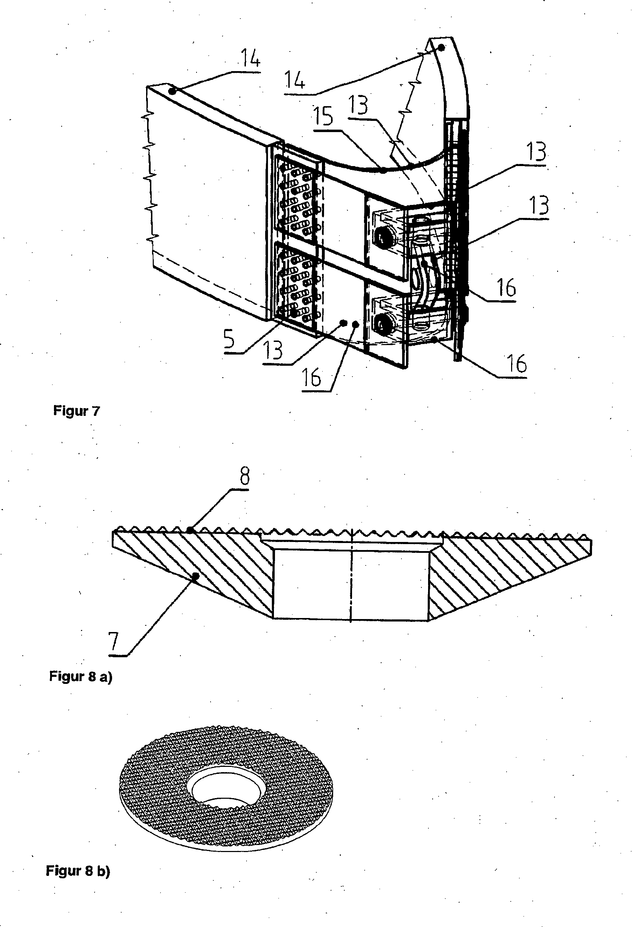

- Fig. 7:: Schalenkoppler als Membran mit Zuganker in perspektivischer Darstellung;

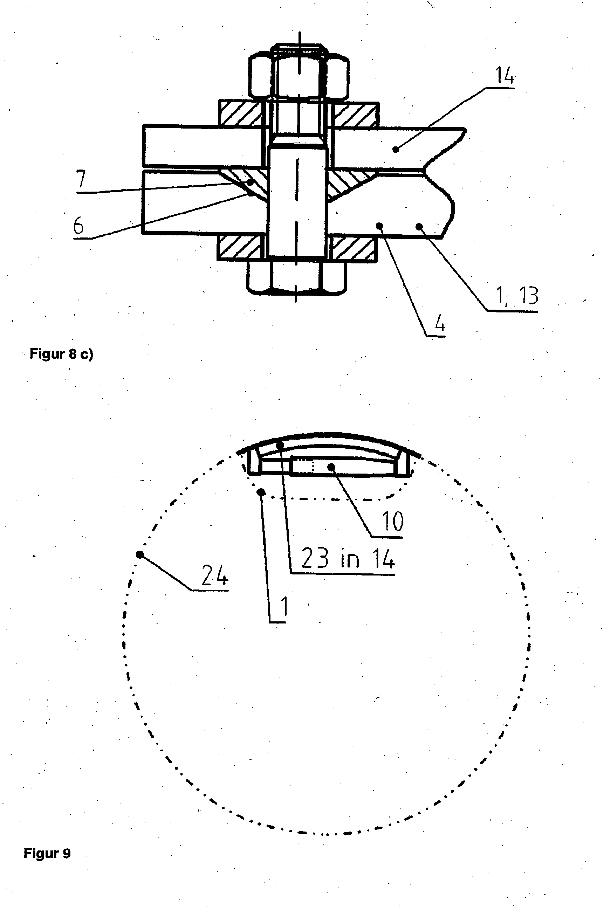

- Fig. 8 a:: Querschnittsdarstellung der Einspannscheibe;
- Fig. 8 b:: Einspannscheibe in perspektivischer Darstellung;
- Fig. 8 c:: Bohrbild der Verbindung von Weichem Kasten oder dem Schalenkoppler und der Rumpfschale mittels Einspannscheibe;
- Fig. 9:: passive Spantspreize im System des Rumpftonnen- und Ersatzquerschnitts;

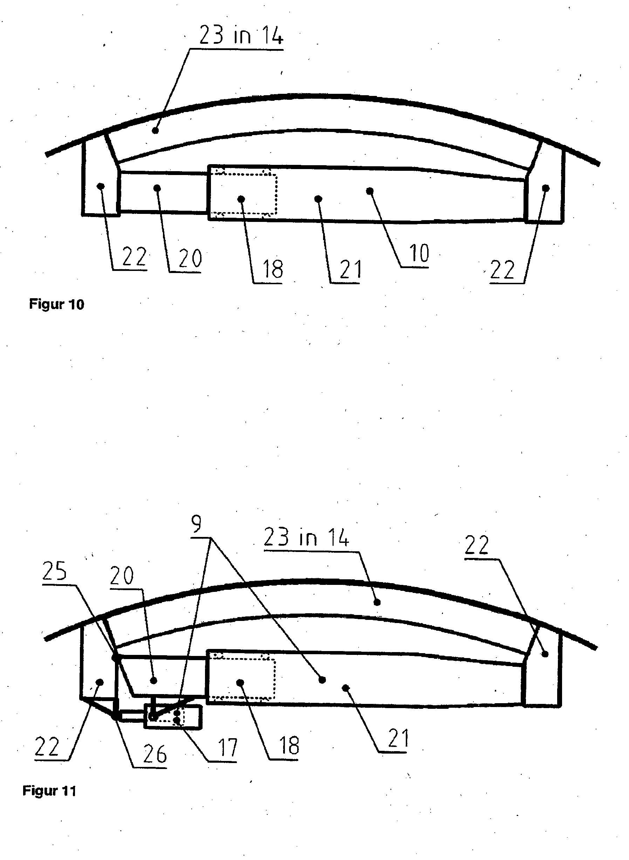

- Fig. 10: Prinzipskizze passive Spantspreize;
- Fig. 11: Prinzipskizze aktive Spantspreize.

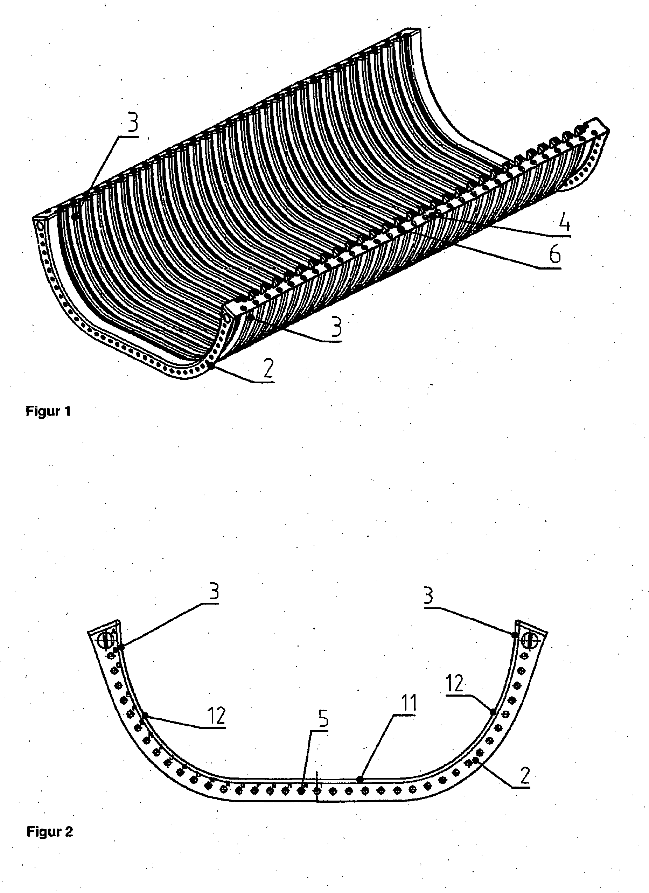

In **Figur 1** ist eine perspektivische Darstellung einer erfindungsgemäßen Komplementärstruktur in der Ausführungsform als Weicher Kasten dargestellt. In Längsrichtung besteht diese aus mehreren alternierend aneinander gereihten und versetzt angeordneten U-Profilen, wobei die Enden der Profilschenkel 3 mit Längsflanschen 4 für die Aufnahme der nicht dargestellten Rumpfschale 14 ausgestaltet sind. Die Profile weisen in Abstimmung mit dem gewählten Lochbild Flankenabstände zwischen 21 mm und 49 mm auf. Weiterhin sind die Längsflansche 4 als Begrenzungen der Komplementärstruktur 1 in Querrichtung zur Einbringung und Aufnahme von Korrekturkräften vorgesehen. Dabei sind die Längsflansche 4 in einem Winkel von je *α_{SW}* = 22° zur Verbindungslinie der Schenkelenden 3 - Sekante - ausgebildet und nehmen den Prüfling über dessen Laschen auf. An den Längsflanschen 4 sind Mittel zur Fixierung 5 der Rumpfschale 14 an der Komplementärstruktur 1 vorgesehen.
Die Begrenzungen des Kastens in Längserstreckung sind als Querflansche 2 ausgebildet. Über die Querflansche 2 ist die Anbindung zum Krafteintrag in den Ersatzquerschnitt, sprich die Komplementärstruktur 1 und die damit verbundene Rumpfschale 14, nachfolgend auch allgemein als Prüfling bezeichnet, ausgestaltet.
Über den Querflansch 2 erfolgt die Einbindung des Weichen Kastens 1 in die Prüfvorrichtung derart, dass eine Druckbeaufschlagung des sich ergebenden Innenraumes der mit der Rumpfschale 14 verbundenen Komplementärstruktur realisierbar ist, um das Druckgefälle bei Flugzeugen in großen Höhen realistisch nachbilden zu können.

In **Figur 2** ist eine Vorderansicht einer Komplementärstruktur 1 in der Ausführungsform als Weicher Kasten 1 dargestellt. Die Querschnittsform des Weichen Kastens 1 wird aus zwei Viertelellipsen 12 gebildet, die an ihrem unteren Hauptscheitelpunkt durch einen horizontalen Abschnitt 11 miteinander verbunden sind. Die Querflansche 2 sind gleichzeitig zur Einleitung und Aufnahme von Prüfkräften in sechs Freiheitsgraden vorgesehen.
Die oberen Scheitel der ellipsoidalen Abschnitte 12 bilden die Schenkel 3, an deren Enden sich die Längsflansche 4 zur Aufnahme der Rumpfschalen 14 befinden. Die dargestellte Ausführungsform zeigt einen Winkel von je α*_{SW}* = 22°. Der Winkel je *α_{SW} =* 22° steht dabei im Zusammenhang mit der Kontur des Prüflings und in einem Verhältnis *b = R_{ref}* · 2 · sin α*_{pü}* zum Abstand der beiden Schenkel 3 zueinander, wobei R_{ref} = 1978 und α_{pü} = 22,5° sind. Die Indizes "SW", "ref" und "pü" stehen für Sandwich, Referenz (z. B. Werkzeugradius) und den mit Überdruck beaufschlagten Kreisausschnitt.
Allgemein gilt die Beziehung *α_{SW} = α_{pü} -* 0,5°. Als besonders vorteilhaft ist hervorzuheben, dass sich infolge der gezielten Steifigkeitsmodellierung des Druckkastens der Winkel *α_{SW}* während der Belastung nur minimal ändert.

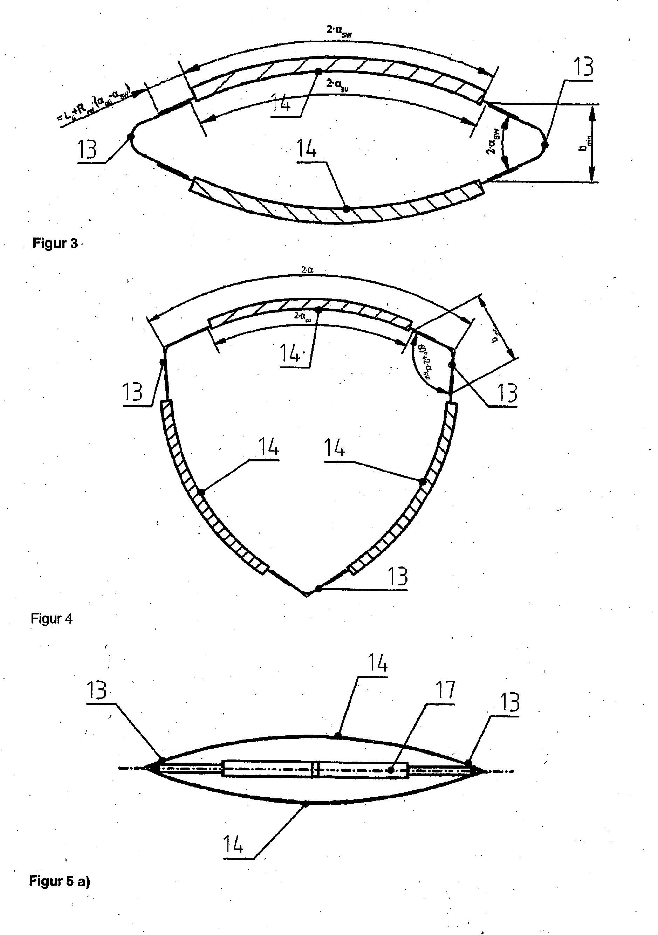

In **Fig. 3** ist schematisch ein Ersatzquerschnitt in der Ausführungsform als Di-Box dargestellt. Dabei werden über zwei Schalenkoppler 13 in'der Entsprechung zur Komplementärstruktur 1 beim Weichen Kasten gemäß Fig. 1 und Fig. 2 zwei Rumpfschalen 14 miteinander zu einer Druckröhre verbunden.
Die Winkelabhängigkeiten in Polygon-Boxen sind allgemein wie folgt beschreibbar:
- *α_{SW}* = *α_{pü} -* 0,5°
- ebene Überlappungslänge *L_{Ü} = f(Nₓ;N_{xψ};µ₀EinaPannscheibe)*
- Öffnungswinkel der Zwischenstücke/Komplemente β =180° - ³⁶⁰/_{N} + 2 · α_{SW}

Der minimale Abstand zwischen zwei Rumpfschalen wird für eine Handzugänglichkeit zu Montagezwecken mit *bₘᵢₙ* =300 gewählt. Eine größere Weite ist nur bei Montageschwierigkeiten oder räumlich kollidierenden Krafteinleitungen sinnvoll.

In **Fig. 4** ist ein schematischer Querschnitt mit Komplementärstruktur in der Ausführungsform als Tri-Box dargestellt. Hierbei werden über drei Schalenkoppler 13 drei Rumpfschalen 14 miteinander zu einer Druckröhre verbunden. Dieses Prinzip ist letztlich theoretisch erweiterbar bis zum Vollquerschnitt. Der Sekantenöffnungswinkel beträgt bei der Tri-Box 60°. Die Winkelbeziehungen bei der Tri-Box sind adäquat zur allgemeinen Beschreibung wie zu Fig. 3.

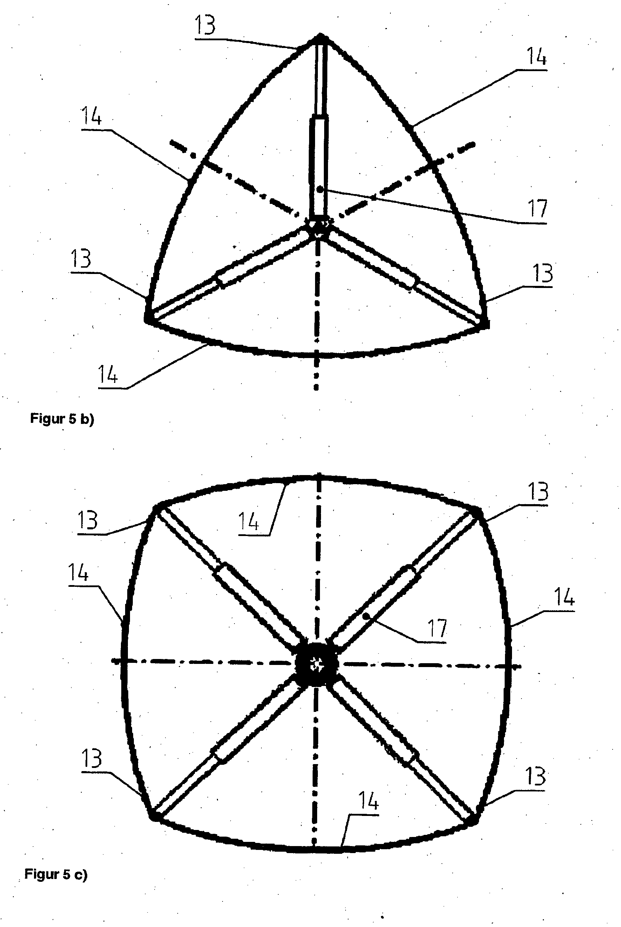

In **Fig. 5a****,** **Fig. 5b und Fig. 5c** sind Ausgestaltungen der Ersatzquerschnitte mit Komplementärstrukturen als Di-, Tri- und Tetra-Box mit der Anordnung von Korrekturaktoren 17 im Inneren der Struktur dargestellt. Die Korrekturaktoren 17 bringen die Korrekturkräfte über die Schalenkoppler 13 auf die Rumpfschalen 14.
Für die in Fig. 5c dargestellte Tetra-Box gelten die gleichen Abhängigkeiten wie für die Tri-Box, jedoch erhöht sich der Sekantenöffnungswinkel von 60° auf 90°.

Die **Figuren 6a und 6b** zeigen Schalenkoppler 13 als Zugplatte in verschiedenen Ausführungen. In Fig. 6a ist ein Schalenkoppler 13 in Y-Form dargestellt. Der Schalenkoppler 13 in Fig. 6b ist im Querschnitt V-förmig ausgebildet und an den freien Schenkelenden über Mittel zur Fixierung 5, beispielsweise mittels der Verbindung über eine Einspannscheibe 7, mit der Rumpfschale 14 verbunden. Am spitzen Winkel greifen nach Fig. 6a Zuganker 16 am Schalenkoppler 13 an, über welche die Korrekturkräfte von außen in die Komplementärstruktur 13 sowie die Rumpfschalen 14 eingeleitet werden. Bei innen liegender Korrekturkrafteinleitung wird der spitze Winkel gemäß Fig. 6b ausgerundet und diskret mit Druckstücken 19, ähnlich denen in einem Druckkasten der D-Box, versehen.
Die **Figuren 6c und 6d** zeigen die Schalenkoppler 13 in der Seitenansicht und der Draufsicht.

In **Fig. 7** ist ein Schalenkoppler 13 als Membran 15 mit Zuganker 16 dargestellt. Die Rumpfschalen 14 sind sowohl mit der Membran 15 als auch mit Zuglaschen als Teil der Zuganker über Mittel zur Fixierung 5 verbunden. Es werden bei dieser differenzierten Ausführung eines Schalenkopplers die Prüfkräfte alleine mittels der Membran übertragen sowie die Korrekturkräfte ausschließlich durch die Zuganker 16 eingeleitet.

In **Fig. 8a** ist eine Einspannscheibe 7 mit pyramidenstumpfartigen Erhebungen 8 im. Querschnitt dargestellt. Alternativ sind Rändelungen möglich, diese wurden jedoch nicht dargestellt. Die Einspannscheibe 7 weist dabei korrespondierend zu den Löchern in den Längsflanschen 4 eine konusförmige Gestalt auf, so dass die Einspannscheibe 7 formschlüssig in dem Loch ruht. Die Pyramidenstümpfe 8 sind derart ausgebildet, dass sie den Reibbeiwert deutlich erhöhen und die Flächenpressung infolge Montagekraft ertragbar gering halten. Durch das Einlaminieren der Trichterform 6 wird außerddem die Unstetigkeit der Löcher abgemildert, respektive begrenzt. **Fig. 8b** zeigt eine Einspannscheibe 7 in perspektivischer Darstellung.

In **Fig. 8c** ist beispielhaft ein Ausschnitt für die bevorzugte Ausgestaltung der Mittel zur Fixierung 5 des Weichen Kastens 1 bzw. der Schalenkoppler 13 mit den Rumpfschalen 14 im Querschnitt dargestellt. Die Rumpfschale 14 liegt um die Bohrungen für die Schraubverbindung herum auf der Einspannscheibe 7 auf, welche mit der abgewandten konischen Seite in der trichterförmigen Vertiefung 6 im Längsflansch 4 des Weichen Kastens 1 oder des Schalenkopplers 13 angeordnet ist.

**In** **Fig. 9** wird eine passive Spantspreize 10 im System des Rumpftonnen- und Ersatzquerschnitts gezeigt. Der Querschnitt einer Rumpftonne 24 ist zur Verdeutlichung des Effektes der Verwendung eines Ersatzquerschnittes mit Komplementärstruktur 1 schematisiert dargestellt. Deutlich erkennbar ist, dass das System des Ersatzquerschnittes mit Komplementärstrukturen zu einer signifikanten Verringerung des Platzbedarfes für derartige Prüfungen führen. Dadurch werden Materialprüfungen für große zu untersuchende Strukturen wirtschaftlich effizient möglich. Die angedeutete Komplementärstruktur 1 nimmt den Prüfling, die Rumpfschale 14 mit dem Spant 23, auf und bildet mit diesem den Ersatzquerschnitt. Durch die Abweichung des Ersatzquerschnitts vom Rumpftonnenquerschnitt 24 kommt es geometrisch bedingt zu unerwünschten Nebeneffekten, welche die Repräsentativität der Messungen beeinträchtigen. Um diesen Effekten zu begegnen wird beispielsweise eine passive Spantspreize 10 eingesetzt.

Die passive Spantspreize 10 ist in **Fig. 10** als Zusammenbauskizze abgebildet. Die Spantspreize 10 ist primär ein Mittel zum Ausgleich der lokal exzentrischen Tangentialkrafteinleitung. Ihre Wirkung beruht darauf, ein Verdrehen der Spantköpfe gegeneinander zu verhindern. In der passiven Ausführung muss demzufolge die Biegesteifigkeit der Spantspreize 10 etwa eine Größenordnung höher sein als die des Haut-Spante-Verbundes. Gleichzeitig wird eine leichtgängige, teleskopische Längenänderung durch den Längenausgleich 18 von innerem Schenkel 20 und äußerem Schenkel 21 der passiven Spantspreize 10 ermöglicht. Dehnungsbedingte Änderungen des Bogenmaßes der Rumpfschale 14 in Umfangsrichtung werden somit passiv ausgeglichen. Über einen Spantkopf 22 sind jeweils der innere Schenkel 20 und der äußere Schenkel 21 mit dem Spant 23 verbunden, welcher seinerseits mit der Rumpfschale 14 verbunden ist.

Das Prinzip der aktiven Spantspreize 9 ist in **Fig. 11** dargestellt. Es entspricht einer Erweiterung der passiven Spantspreize 10. Dabei ist der innere Schenkel 20 über ein Gelenk 25 mit dem Spantkopf 22 beweglich verbunden. Zusätzlich ist parallel zum inneren Schenkel 20 ein Korrekturfaktor 17 an diesem angeordnet, dessen Kolbenstange an einem Gelenk 26 angreift, welches gleichfalls am Spantkopf 22 angeordnet ist. Kommt es infolge Überdrucks nun zu einer Dehnung in Umfangsrichtung der Rumpfschale, bewegt sich der innere Schenkel 20 aus dem Längenausgleich 18 heraus. Um ein Verdrehen des Spantkopfs 22 tatsächlich und unabhängig von der Biegesteifigkeiten der Spantspreize zu vermeiden, wird nun durch Zug/Druck des Korrekturaktors 17 das Biegemoment winkeltreu oder hyperkorrigiert über die Gelenke 25 und 26 eingestellt.

### LISTE DER BEZUGSZEICHEN

- 1: Komplementärstruktur - "Weicher Druckkasten"
- 2: Querflansch
- 3: Schenkel
- 4: Längsflansche
- 5: Mittel zur Fixierung
- 6: trichterförmige Vertiefung
- 7: Einspannscheibe
- 8: Pyramidenstümpfe
- 9: aktive Spantspreize
- 10: passive Spantspreize
- 11: horizontaler Abschnitt
- 12: ellipsoidaler Abschnitt, Viertelellipsen
- 13: Komplementärstruktur - Schalenkoppler
- 14: Rumpfschale
- 15: Membran
- 16: Zuganker
- 17: Korrekturaktor
- 18: Längenausgleich
- 19: Druckstücke
- 20: innerer Schenkel
- 21: äußerer Schenkel
- 22: Spantkopf
- 23: Spant
- 24: Querschnitt einer Rumpftonne
- 25: Gelenk innerer Schenkel Spantkopf
- 26: Gelenk Korrekturkraftaktor Spantkopf

## Patentansprüche

1. Prüfvorrichtung für Rumpfschalen (14), wobei der Prüfling mit einer im Querschnitt U-förmigen Komplementärstruktur (1) mit Schenkeln (3) verbunden ist und dass an den Enden der Schenkel (3) Längsflansche (4) in Längsrichtung der Komplementärstruktur (1) mit Mitteln zur Fixierung (5) der Rumpfschale (14) an der Komplementärstruktur (1) zur Einleitung und Aufnahme von Korrekturkräften vorgesehen sind und dass an den Begrenzungen der Komptementärstrüktur (1) in Längsrichtung Querflansche (2) zur Einleitung und Aufnahme von Prüfkräften in sechs Freiheitsgraden vorgesehen sind, **dadurch gekennzeichnet, dass** die Komplementärstruktur (1) als Weicher Kasten aus Verbundmaterialien ausgebildet ist und dass der U-förmige Querschnitt der Komplementärstruktur (1) aus einem horizontalen geraden Abschnitt (11) und zwei sich jeweils seitlich anschließenden ellipsoidalen Abschnitten (12), welche die Schenkel (3) der U-förmigen Komplementärstruktur (1) bilden, besteht.

2. Prüfvorrichtung nach Anspruch 1, **dadurch gekennzeichnet, dass** die ellipsoidalen Abschnitte (12) als Viertelellipsen ausgebildet sind.

3. Prüfvorrichtung nach Anspruch 1 oder 2, **dadurch gekennzeichnet, dass** die Längsflansche (4) in einem Winkel von *α_{SW} = α_{pü}* - 0,5° zur horizontalen Verbindungslinie zwischen den Schenkeln (3) ausgebildet sind, wobei der Index "SW" für Sandwich und "pü" für den mit Überdruck beaufschlagten Kreisausschnitt stehen.

4. Prüfvorrichtung nach einem der Ansprüche 1 bis 3, **dadurch gekennzeichnet, dass** die Längsflansche (4) in einem Winkel von α_{SW} = 22° zur horizontalen Verbindungslinie zwischen den Schenkeln (3) ausgebildet sind.

5. Prüfvorrichtung nach einem der Ansprüche 1 bis 4, **dadurch gekennzeichnet, dass** die Komplementärstruktur (1) - Weicher Druckkasten - in Längsrichtung aus alternierend aneinandergereihten U-Profilen gebildet wird.

6. Prüfvorrichtung nach einem der Ansprüche 1 bis 5, **dadurch gekennzeichnet, dass** die Komplementärstruktur (1) eine Materialdicke von 13,6 mm aufweist.

7. Prüfvorrichtung nach einem der Ansprüche 1 bis 6, **dadurch gekennzeichnet, dass** die Komplementärstruktur (1) aus dreiundzwanzig einzelnen Schichten aufgebaut ist.

8. Prüfvorrichtung nach einem der Ansprüche 1 bis 7, **dadurch gekennzeichnet, dass** die Mittel zur Fixierung (5) der Rumpfschale (14) an der Komplementärstruktur (1, 13) aus einer trichterförmigen Vertiefung (6) und einer korrespondierend dazu ausgebildeten Einspannscheibe (7) sowie aus Schrauben und Muttern bestehen, wobei an der der Rumpfschale (14) zugewandten Oberseite der Einspannscheibe (7) eine Riffelung aus Pyramidenstümpfen (8) vorgesehen ist.

9. Prüfvorrichtung nach einem der Ansprüche 1 bis 8, **dadurch gekennzeichnet, dass** die Komplementärstruktur (1, 13) aus glasfaserverstärktem Epoxidharz ausgebildet ist.

10. Prüfvorrichtung nach einem der Ansprüche 1 bis 9, **dadurch gekennzeichnet, dass** die Rumpfschalen (14) als spantverstärkte Rumpfschalen ausgebildet sind und dass eine passive Spantspreize (10) vorgesehen ist, die einen inneren und äußeren Schenkel (20, 21), verbunden über einen Längenausgleich (18), aufweist, wobei die passiven Spantspreizen (10) derart ausgebildet sind, dass die lokal exzentrische Tangentialkrafteinleitung ausgleichbar ist, wobei der relative Winkel zwischen den Spantköpfen unter Belastung der Rumpfschale annähernd konstant bleibt.

11. Prüfvorrichtung nach einem der Ansprüche 1 bis 9, **dadurch gekennzeichnet, dass** die Rumpfschalen (14) als spantverstärkte Rumpfschalen ausgebildet sind und dass eine aktive Spantspreize (9) vorgesehen ist, die einen inneren und äußeren Schenkel (20, 21), verbunden über einen Längenausgleich (18), aufweist und dass weiterhin der innere Schenkel (20) über ein Gelenk (25) mit dem Spantkopf (22) verbunden ist und dass ein Korrekturaktor (17) am inneren Schenkel (20) parallel angeordnet und mit der Kolbenstange über ein Gelenk (26) mit dem Spantkopf (22) derart verbunden ist, dass die lokal exzentrische Tangentialkrafteinleitung ausgleichbar ist und der relative Winkel zwischen den Spantköpfen (22) unter Belastung der Rumpfschale (14) konstant bleibt oder hyperkorrigiert wird, wobei entweder der Winkel oder das Biegemoment als Regelgröße genutzt wird und die jeweils abhängige Komponente sich einstellt.

## Claims

1. Testing device for fuselage shells (14), wherein the test specimen is connected to a complementary structure (1) which, in cross-section, has a U-shape and which has legs (3), and wherein at the ends of the legs (3) provision is made for longitudinal flanges (4) in longitudinal direction of the complementary structure (1) with fixing means (5) for fixing the fuselage shell (14) at the complementary structure (1) for transmission and absorption of corrective forces, and wherein transversal flanges (2) are provided at the boundaries of the complementary structure (1) in longitudinal direction for transmission and absorption of test forces in six degrees of freedom, **characterized in that** the complementary structure (1) is embodied as a soft box made of composite materials, and the U-shaped cross-section of the complementary structure (1) is composed of a horizontal straight section (11) and two laterally adjoining ellipsoidal sections (12) which form the legs (3) of the U-shaped complementary structure (1).

2. Testing device according to claim 1, **characterized in that** the ellipsoidal sections (12) are designed as quarter ellipses.

3. Testing device according to claim 1 or 2, **characterized in that** the longitudinal flanges (4) are formed at an angle of α_{sw} = α_{pü} - 0.5° with respect to the horizontal connection line between the legs (3), wherein the index "sw" is indicative of sandwich and the index "pü" is indicative of the circular sector to which overpressure is applied.

4. Testing device according to any of claims 1 to 3, **characterized in that** the longitudinal flanges (4) are formed at an angle of α_{SW} = 22° with respect to the horizontal connection line between the legs (3).

5. Testing device according to any of claims 1 to 4, **characterized in that** the complementary structure (1), which is designed as a soft pressure box, is formed by U-profiles being alternately juxtaposed in longitudinal direction.

6. Testing device according to claim 1 or 5, **characterized in that** the complementary structure (1) has a material thickness of 13.6 mm.

7. Testing device according to any of claims 1 to 6, **characterized in that** the complementary structure (1) is composed of twenty-three individual layers.

8. Testing device according to any of claims 1 to 7, **characterized in that** the fixing means (5) for fixing the fuselage shell (14) at the complementary structure (1, 13) are composed of a funnel-shaped indentation (6) and a correspondingly formed clamping disc (7) as well as of screws and nuts, wherein corrugations consisting of truncated pyramids (8) are provided on the upper side of the clamping disc (7) facing the fuselage shell (14).

9. Testing device according to any of claims 1 to 8, **characterized in that** the complementary structure (1, 13) is made of glass-fiber reinforced epoxy.

10. Testing device according to any of claims 1 to 9, **characterized in that** the fuselage shells (14) are designed as rib-reinforced fuselage shells and a passive rib strut (10) is provided, which has an inner leg and an outer leg (20, 21) being connected via a length compensation (18), wherein the passive rib struts (10) are formed such that the locally eccentric tangential force transmission can be compensated, wherein the relative angle between the rib heads remains essentially constant when stress is applied to the fuselage shell.

11. Testing device according to any of claims 1 to 9, **characterized in that** the fuselage shells (14) are designed as rib-reinforced fuselage shells and an active rib strut (9) is provided, which has an inner leg and an outer leg (20, 31) being connected via a length compensation (18), and wherein the inner leg (20) is further connected to the rib head (22) via a joint (25) and a corrective actuator (17) is arranged in parallel at the inner leg (20) and together with the piston rod is connected to the rib head (22) via a joint (26) in such a manner that the locally eccentric tangential force transmission can be compensated and the relative angle between the rib heads (22) remains constant or is hyper-corrected when stress is applied to the fuselage shell (14), wherein either the angle or the bending moment is used as control variable and the respectively relevant control variable is automatically adjusted.

## Revendications

1. Dispositif d'essai pour coques des fuselage (14), dans lequel le spécimen d'essai est relié à une structure complémentaire (1) étant conçue sous la forme d'un U en section transversale et présentant des jambes (3), et dans lequel des flasques longitudinaux (4) sont prévus aux extrémités des jambes (3) en direction longitudinale de la structure complémentaire (1) avec des moyens de fixation (5) pour fixer la coque de fuselage (14) à la structure complémentaire (1) aux fins de la transmission et absorption de forces correctives, et dans lequel des flasques transversaux (2) sont prévus au niveau des confins de la structure complémentaire (1) en direction longitudinale aux fins de la transmission et absorption de forces d'essai avec six degrés de liberté, **caractérisé en ce que** la structure complémentaire (1) est conçue en tant que boite souple constituée de matériaux composites, et la section transversale conçue sous la forme d'un U de la structure complémentaire (1) étant constituée d'une section horizontale droite (11) et deux sections ellipsoïdes (12) latéralement adjacentes formant les jambes (3) de la structure complémentaire (1) conçue sous la forme d'un U.

2. Dispositif d'essai selon la revendication 1, **caractérisé en ce que** les sections ellipsoïdes (12) sont conçues en tant que quarts d'ellipse.

3. Dispositif d'essai selon la revendication 1 ou 2, **caractérisé en ce que** les flasques longitudinaux (4) sont formés avec un angle de α_{SW} = α_{pü} - 0.5° par rapport à la ligne de liaison entre les jambes (3), dans lequel l'index "sw" est indicative de sandwich et l'index "pü" est indicative de la section circulaire sur laquelle la sous-pression est appliquée.

4. Dispositif d'essai selon l'une quelconque des revendications 1 à 3, **caractérisé en ce que** les flasques longitudinaux (4) sont formés avec un angle de α_{SW} = 22° par rapport à la ligne de liaison entre les jambes (3).

5. Dispositif d'essai selon l'une quelconque des revendications 1 à 4, **caractérise en ce que** la structure complémentaire (1), étant conçue en tant que boite de pression souple, est formée par des profiles étant conçus sous la forme d'un U et étant juxtaposés en alternance en direction longitudinale.

6. Dispositif d'essai selon l'une quelconque des revendications 1 à 5, **caractérise en ce que** la structure complémentaire (1) présente une épaisseur du matériaux de 13.6 mm.

7. Dispositif d'essai selon l'une quelconque des revendications 1 à 6, **caractérise en ce que** la structure complémentaire (1) se compose de vingt-trois couches individuelles.

8. Dispositif d'essai selon l'une quelconque des revendications 1 à 7, **caractérise en ce que** les moyens de fixation (5) pour fixer la coque de fuselage (14) à la structure complémentaire (1, 13) se composent d'une indentation (6) en forme d'entonnoir et une plaque de serrage (7) formée de manière correspondante ainsi que de vis et écrous, dans lequel une cannelure constituée de pyramides tronquées (8) est prévue sur le coté supérieure de la plaque de serrage (7) faisant face à la coque de fuselage (14).

9. Dispositif d'essai selon l'une quelconque des revendication 1 à 8, **caractérise en ce que** la structure complémentaire (1, 13) est constituée de résine époxy renforcée de fibres de verre.

10. Dispositif d'essai selon l'une quelconque des revendications 1 à 9, **caractérise en ce que** les coques de fuselage (14) sont conçues comme coques de fuselage renforcées de couples et un étrésillon de couple passif (10) est prévu, qui présente une jambe intérieure et une jambe extérieure (20, 21) étant reliées via une compensation de longueur (18), dans lequel les étrésillons de couple passifs (10) sont conçus de telle manière que la transmission de la force tangentielle excentrique puisse être compensée, et dans lequel l'angle relatif entre les têtes de couple reste sensiblement constant lorsqu'une pression soit appliquée sur la coque de fuselage.

11. Dispositif d'essai selon l'une quelconque des revendications 1 à 9, **caractérise en ce que** les coques de fuselage (14) sont conçues comme coques de fuselage renforcées de couples et un étrésillon de couple actif (9) est prévu, qui présente une jambe intérieure et une jambe extérieure (20, 21) étant reliées via une compensation de longueur (18), et dans lequel la jambe intérieure (20) en plus est reliée à la tête de couple (22) via un joint (25), et un actuateur correctif (17) est disposé en parallèle au niveau de la jambe intérieure (20) et avec la tige de piston est relié à la tête de couple (22) via un joint (26) de telle manière que la transmission de la force tangentielle excentrique puisse être compensée et l'angle relatif entre les têtes de couple (22) reste constant ou est hyper-corrigé lorsqu'une pression soit appliquée à la coque de fuselage (14), et dans lequel soit l'angle soit le couple de flexion est utilisé comme variable de contrôle, et la variable de contrôle respectivement pertinente s'ajuste automatiquement.
